# FASCICULE DE BREVET EUROPEEN

(11) **EP 3 716 130 B1**
(45) Date de publication et mention de la délivrance du brevet: **05.05.2021**
(21) Numéro de dépôt: 20164604.9
(22) Date de dépôt: 20.03.2020
(51) Int. Cl.: G06F 21/74, G06F 21/77, G06K 7/10, H04W 4/80

(54) **SYSTÈME ÉLECTRONIQUE**
ELEKTRONISCHES SYSTEM
ELECTRONIC SYSTEM

(30) Priorité: 25.03.2019 FR 1903070
(43) Date de publication de la demande: 30.09.2020
(73) Titulaire: PROTON WORLD INTERNATIONAL N.V., 1831 Diegem (BE)
(72) Inventeur: VAN NIEUWENHUYZE, Olivier, 1970 WEZEMBEEK-OPPEM (BE)
(74) Mandataire: Cabinet Beaumont

(56) Documents cités:
- EP-A1- 3 422 197
- US-A1- 2014 156 872
- US-A1- 2014 227 972

## Description

### Domaine technique

La présente description concerne de façon générale les appareils électroniques. La présente description s'applique de façon plus particulière à un composant électronique adapté à mettre en oeuvre plusieurs, au moins deux, systèmes d'exploitation différents.

### Technique antérieure

Les appareils électroniques complexes, tels que les téléphones portables, les tablettes électroniques, les ordinateurs, etc, intègrent, au fil du temps, de plus en plus de fonctionnalités et permettent la mise en place de services numériques et/ou digitaux afin de s'intégrer au mieux à la vie quotidienne. A titre d'exemple, certains téléphones portables, et plus particulièrement des téléphones intelligents (smartphones), intègrent des services digitaux tels qu'un service de paiement bancaire, ou encore un service d'utilisation de titres de transport en commun, de billets de spectacle, une authentification de l'utilisateur auprès d'un système à distance (bancaire, administration publique, etc.). Pour mettre en oeuvre ces fonctionnalités, ces appareils peuvent intégrer des composants électroniques spécifiques à ces fonctionnalités, comme par exemple des composants sécurisés qui permettent de conserver/stocker des informations d'identification, de référence et d'authentification, généralement désignées par "credentials", et des ressources (assets) du fournisseur du service digital, des capteurs de mouvement, un module de communication en champ proche (Near Field Communication, NFC), etc. Les documents US2014/0227972-A1, EP3422197-A1 et US2014/0156872-A1 décrivent l'état de la technique antérieur.

Une difficulté découlant de l'ajout de nouvelles fonctionnalités, est que cela peut obliger certains composants électroniques à mettre en oeuvre plusieurs, au moins deux, systèmes d'exploitation. De plus, des difficultés peuvent résulter de la cohabitation de plusieurs systèmes d'exploitation avec différents composants/périphériques qui lui sont connectés.

### Résumé de l'invention

Il serait souhaitable de pouvoir améliorer, au moins en partie, certains aspects des appareils électroniques complexes, connus, tels que les téléphones portables, et plus particulièrement de pouvoir améliorer, au moins en partie, certains aspects de la cohabitation de plusieurs systèmes d'exploitation sur un même composant électronique.

Il existe un besoin pour un composant électronique adapté à la cohabitation de plusieurs systèmes d'exploitation et de leurs applications.

Il existe un besoin pour un appareil électronique comprenant un module de communication en champ proche (Near Field Communication, NFC), adapté à la cohabitation de plusieurs systèmes d'exploitation.

Un mode de réalisation pallie tout ou partie des inconvénients des appareils électroniques connus comprenant plusieurs systèmes d'exploitation et un module de communication en champ proche.

Un mode de réalisation prévoit un appareil électronique comprenant au moins un élément sécurisé adapté à mettre en oeuvre au moins deux systèmes d'exploitation, et au moins un module de communication en champ proche relié audit un élément sécurisé par au moins une mémoire volatile.

Selon un mode de réalisation, la mémoire volatile est reliée au module de communication en champ proche par un premier bus, et à l'élément sécurisé par un deuxième bus.

Selon un mode de réalisation, la mémoire volatile est directement connectée au module de communication en champ proche par le premier bus, et à l'élément sécurisé par le deuxième bus.

Selon un mode de réalisation, le module de communication en champ proche est relié audit élément sécurisé par au moins deux mémoires volatiles ou deux zones mémoires d'une même mémoire volatile.

Selon un mode de réalisation, le module de communication en champ proche est adapté à aiguiller des données vers l'une ou l'autre des mémoires, l'élément sécurisé comportant une interface adaptée à associer chaque système d'exploitation à une des mémoires volatiles.

Selon un mode de réalisation, l'interface utilise une table de routage pour faire le lien entre un système d'exploitation et un bus.

Selon un mode de réalisation, le nombre de mémoires volatiles est égal au nombre de systèmes d'exploitation.

Selon un mode de réalisation, le module de communication en champ proche est relié audit élément sécurisé par une seule mémoire volatile.

Selon un mode de réalisation, le module de communication en champ proche est relié audit élément sécurisé par, en outre, un circuit d'aiguillage aiguillant des données entre les systèmes d'exploitation.

Selon un mode de réalisation, le circuit d'aiguillage est une machine d'état.

Selon un mode de réalisation, la machine d'état fait partie de l'élément sécurisé.

Selon un mode de réalisation, le circuit d'aiguillage est une table de routage.

Selon un mode de réalisation, la table de routage fait partie du module de communication en champ proche.

Selon un mode de réalisation, le circuit d'aiguillage est adapté à stocker des paramètres caractérisant un des systèmes d'exploitation.

Selon un mode de réalisation, un des systèmes d'exploitation est le système d'exploitation d'une carte SIM, d'une carte de paiement, ou d'une carte de transport en commun.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de façon très schématique, des circuits électroniques d'un appareil électronique ;

la figure 2 représente, de façon schématique et sous forme de blocs, un module de communication NFC et un élément sécurisé d'un mode de réalisation d'un appareil électronique ;

la figure 3 représente, de façon schématique et sous forme de blocs, un module de communication NFC et un élément sécurisé d'un autre mode de réalisation d'un appareil électronique ;

la figure 4 représente, de façon schématique et sous forme de blocs, un module de communication NFC et un élément sécurisé d'un autre mode de réalisation d'un appareil électronique ;

la figure 5 représente, de façon schématique et sous forme de blocs, un module de communication NFC et un élément sécurisé d'un autre mode de réalisation d'un appareil électronique ;

la figure 6 représente, de façon schématique et sous forme de blocs, un module de communication NFC et un élément sécurisé d'un autre mode de réalisation d'un appareil électronique.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les modes de réalisation décrits par la suite sont adaptés à la technologie de communication de champ proche (Near Field Communication, NFC) standard. Cette technologie ne sera pas décrite par la suite.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

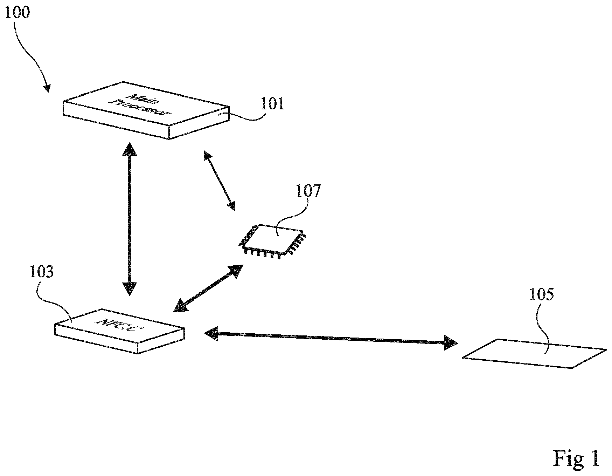

La figure 1 représente, de façon très schématique, certains des circuits électroniques d'un appareil électronique 100. L'appareil 100 est par exemple un téléphone portable, par exemple de type téléphone intelligent (smartphone), une tablette tactile ou tablette numérique, etc.

Selon un mode de réalisation, l'appareil 100 comprend un composant électronique (107) adapté à mettre en oeuvre plusieurs systèmes d'exploitation, par exemple au moins deux. L'appareil 100 est compatible avec la technologie de communication en champ proche (Near Field Communication, NFC). Ainsi l'appareil 100 comprend, entre autres, au moins un processeur 101, au moins un module de communication en champ proche, contrôleur NFC, ou module NFC, 103, au moins une antenne 105, et au moins un élément sécurisé 107.

Le processeur 101 est, par exemple, considéré comme le processeur principal de l'appareil 100. Le processeur 101 est adapté à mettre en oeuvre des commandes, transmises, par exemple, par l'élément sécurisé 107 ou par le module NFC 103. Le processeur 101 est en outre adapté à mettre en oeuvre d'autres commandes et fonctionnalités d'autres composants de l'appareil 100.

Le module NFC 103 est adapté à transmettre et à recevoir des données par l'intermédiaire de l'antenne 105. Le module NFC 103 est, en outre, adapté à transmettre et recevoir des données et/ou des commandes de la part du processeur 101 et de l'élément sécurisé 107.

L'antenne 105 est adaptée à la technologie de communication en champ proche.

L'élément sécurisé 107 est adapté à recevoir et à transmettre des données au module NFC 103 et au processeur 101. L'élément sécurisé 107 permet de mettre en oeuvre des fonctionnalités sécurisées de l'appareil 100. L'élément sécurisé 107 est, par exemple, un élément sécurisé embarqué (eSE - Embedded Secure Element) ou intégré (iSE - Integrated/Imbedded Secure Element).

Selon un mode de réalisation, l'élément sécurisé 107 est adapté à mettre en oeuvre plusieurs, au moins deux, systèmes d'exploitation. Chaque système d'exploitation n'a pas connaissance des autres systèmes d'exploitation qui cohabitent avec lui-même sur le même composant électronique. Il ne peut pas communiquer, interagir ou accéder aux données des autres systèmes d'exploitation. Autrement dit, lorsqu'il est "activé", un système d'exploitation pense être le seul à pouvoir accéder aux composants de l'appareil 100. A titre d'exemple dans le cas où l'appareil 100 est un téléphone portable, le système d'exploitation principal ou premier système d'exploitation est celui d'une carte SIM (Subscriber Identity Module) dans lequel les informations d'identification du propriétaire du téléphone sont stockées ainsi que d'autres informations permettant de connecter/enregistrer l'appareil à un réseau mobile. Ce premier système d'exploitation peut, le cas échéant, contenir d'autres services tels qu'un service de carte de transport en commun. Dans ce cas, une application numérique peut être fournie par le système d'exploitation de la carte de transport en commun en utilisant un bus, par exemple un bus unifilaire, pour établir la communication entre le module NFC 103 et l'élément de sécurité 107. A titre d'exemple, dans ce cas, un deuxième système d'exploitation peut être un système d'exploitation d'une carte de paiement.

Ainsi avec plusieurs systèmes d'exploitation, l'appareil 100 peut, en fonction des situations d'utilisation, proposer les fonctionnalités liées soit au premier soit au deuxième système d'exploitation. En d'autres termes, l'appareil peut, par exemple, servir de carte de paiement ou de carte de transport en commun.

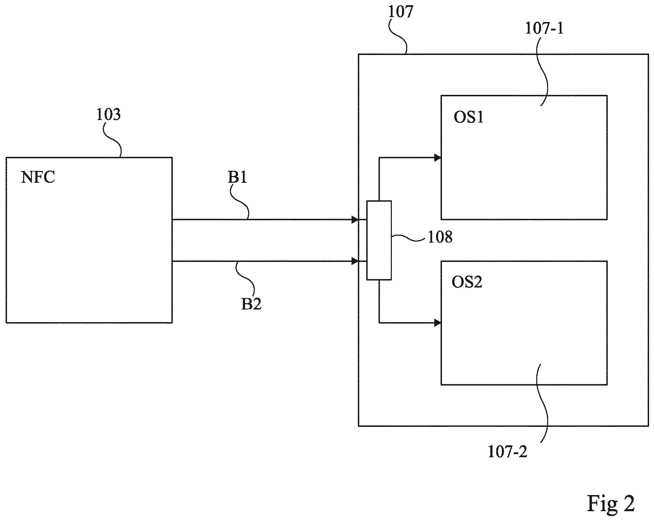

Différents moyens de liaison entre l'élément sécurisé 107 et le module NFC 103 seront détaillés en relation avec les figures 2 à 4.

La figure 2 représente, de façon schématique et sous forme de blocs, un mode de réalisation de moyens de liaison entre le module NFC (NFC) 103 et l'élément sécurisé 107 du mode de réalisation de l'appareil 100 décrit en relation avec la figure 1. L'élément 107 est adapté à mettre en oeuvre deux systèmes d'exploitation, chacun symbolisé par un bloc portant la référence (OS1) 107-1, (OS2) 107-2. L'élément sécurisé 107 comprend et implémente une interface, ou couche d'interface, ou couche d'abstraction, 108 du bus de communication.

Dans ce mode de réalisation, le module NFC 103 est reliée à l'élément sécurisé 107 par l'intermédiaire de deux bus B1 et B2. Chaque bus B1, B2 est adapté à transmettre et à recevoir des données et commandes relatives à un seul système d'exploitation ou à une application s'exécutant à partir de ce système d'application. Dans le cas de la figure 2, le module NFC (NFC) 103 est adapté à aiguiller les données vers le bus B1, B2 adéquat. A titre d'exemple, le module NFC 103 peut utiliser une partie des données ou des commandes pour savoir vers quel système d'exploitation la diriger. A titre d'exemple, les bus B1 et B2 sont des bus unifilaires exploitant un protocole de bus unifilaire, SWP - Single Wire Protocol, ou sont des bus multifilaires exploitant un protocole de bus multifilaire de type MIPI DSI (Mobile Industry Processor Interface Display Serial Interface), de type I2C (Inter-Integrated Circuit), de type I3C (une évolution du type I3C), ou de type SPI (Sérial Peripheral Interface). En variante, les bus sont constitués de n'importe quel support de communication approprié entre le module de communication en champ proche et l'élément sécurisé.

La couche d'abstraction 108 permet par exemple au système d'exploitation 107-1 d'envoyer des commandes via le bus sans devoir se préoccuper s'il doit utiliser le bus B1 ou B2. Le système d'exploitation 107-1 voit uniquement (pour lui-même) l'existence d'un bus. La couche d'interface 108 permet donc d'établir la relation entre les couples système d'exploitation/bus 107-1/B1 et 107-2/B2, sans que chaque système d'exploitation 107-1, 107-2 ne sache que l'autre existe. Pour ce faire, un mode de réalisation consiste en la modélisation/création, par la couche 108, d'une table de routage ou de translation entre les couples. Les systèmes d'exploitation 107-1 et 107-2, lorsqu'ils communiquent via le bus B1 ou B2, parlent au bus de manière "générique". En d'autres termes, les deux systèmes d'exploitation 107-1 et 107-2 ne connaissent pas l'existence des deux bus B1 et B2. Pour chacun d'entre eux il n'existe qu'un seul bus. La couche 108 peut, par exemple, limiter le nombre de systèmes d'exploitation (ou le nombre de systèmes d'exploitation demandant l'accès au bus qu'elle gère) au nombre de bus de communication disponibles demandés par les systèmes d'exploitation, ce qui peut être utile dans le cas où le nombre de bus est inférieur au nombre de systèmes d'exploitation gérés par l'élément sécurisé. Selon un mode de réalisation, le module NFC 103 contient une information représentative du nombre de systèmes d'exploitation que met en oeuvre l'élément sécurisé 107.

Selon une variante de réalisation, l'appareil 100 pourrait comprendre un élément sécurisé adapté à mettre en oeuvre plus de deux systèmes d'exploitation pouvant recevoir et/ou transmettre des données du module NFC. Dans ce cas, le module NFC pourrait être relié à l'élément sécurisé par autant de bus que de systèmes d'exploitation mis en oeuvre par l'élément sécurisé.

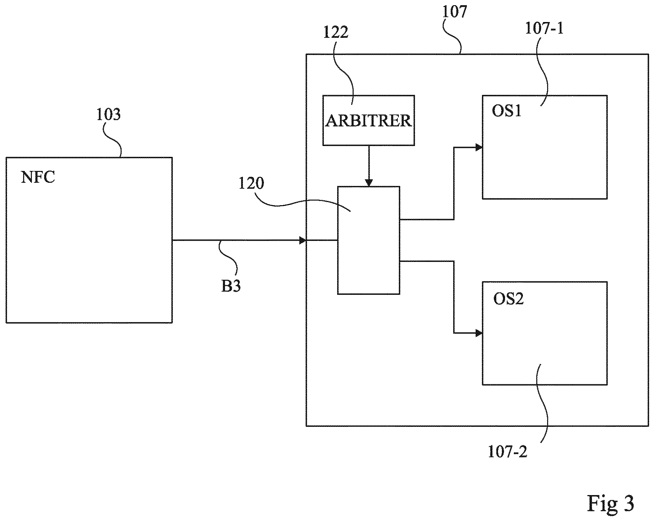

La figure 3 représente, de façon schématique et sous forme de blocs, un autre mode de réalisation d'un moyen de liaison entre le module NFC 103 et l'élément sécurisé 107 du mode de réalisation de l'appareil 100 décrit en relation avec la figure 1. Comme en figure 2, l'élément 107 est adapté à mettre en oeuvre deux systèmes d'exploitation, chacun symbolisé par un bloc portant la référence (OS1) 107-1, (OS2) 107-2.

Dans ce mode de réalisation, le module NFC 103 est relié à l'élément sécurisé 107 par l'intermédiaire d'un unique bus B3 qui transmet des données et commandes destinées indifféremment aux deux systèmes d'exploitation. L'élément sécurisé 107 comprend une couche d'aiguillage/abstraction 120, ou circuit d'aiguillage, permettant d'aiguiller les données et commandes vers le système d'exploitation concerné. Le circuit d'aiguillage 120 permet, en outre, d'effectuer des modifications, ou des adaptations, sur les données et commandes qu'il transmet aux deux systèmes d'exploitation, de façon que chaque système d'exploitation n'ait pas conscience de l'existence des autres systèmes d'exploitation. Ainsi, chaque système d'exploitation croit être le seul à mettre en oeuvre l'élément sécurisé 107. La couche d'aiguillage/abstraction est pilotée par une entité externe d'arbitrage (ARBITRER) 122, ou arbitre, qui est contrôlée, par exemple, par le processeur principal 101. Cet arbitre interagit avec l'élément sécurisé 107, et plus particulièrement avec la couche d'aiguillage/abstraction 120, pour lui signifier quel système d'exploitation sera en charge de traiter les données qui arrivent. La couche d'aiguillage/abstraction a aussi pour rôle que, lorsqu'un système d'exploitation est activé pour la première fois, ce système d'exploitation va vouloir configurer le contrôleur NFC avec ses propres paramètres (comme défini dans la norme ETSI TS 102 622). Lorsqu'un autre système d'exploitation sera activé pour la première fois, il devra également configurer le module NFC avec ses propres paramètres. Sans le circuit d'aiguillage, cette dernière opération effacerait la configuration du premier système d'exploitation. La couche d'aiguillage doit donc "mémoriser" la configuration faite par chaque système d'exploitation et la recharger dans le contrôleur NFC à chaque changement d'activation d'un système d'exploitation différent. Le circuit d'aiguillage peut prendre plusieurs formes et peut varier selon l'application, mais la configuration mémorisée reste utilisable et stockée en interne par le circuit d'aiguillage, qui peut alors la compléter par de nouvelles informations de configuration fournies par chaque système d'exploitation pour le contrôleur NFC. Dans le mode de réalisation illustré par la figure 3, le circuit d'aiguillage est une machine d'état comprenant une entrée, reliée au bus B3, et deux sorties, chacune en communication avec un système d'exploitation de l'élément sécurisé 107-1, 107-2.

Selon une variante de réalisation, l'appareil 100 pourrait comprendre un élément sécurisé adapté à mettre en oeuvre plus de deux systèmes d'exploitation, dans ce cas, le circuit d'aiguillage comprend autant de sorties que de systèmes d'exploitation pouvant recevoir et/ou transmettre des données du module NFC, et mis en oeuvre par l'élément sécurisé 107.

Le circuit d'aiguillage 120 utilise, par exemple, une information contenue dans les données ou les commandes pour déterminer quel système d'exploitation en est le destinataire. Selon un autre exemple, le circuit de routage pourrait être commandé par l'élément sécurisé 107 ou par le module NFC 103 pour aiguiller les données vers le système d'exploitation 107-1, 107-2 concerné. Le circuit d'aiguillage sert, en particulier, à affecter des canaux (pipe) à des ports du routeur NFC. Le circuit d'aiguillage créé par la couche d'aiguillage/translation 120 est par exemple mis en oeuvre par une table de correspondance, par exemple stockée dans une mémoire non volatile. Selon une variante, le circuit d'aiguillage 120 peut être mise en oeuvre par une machine d'état.

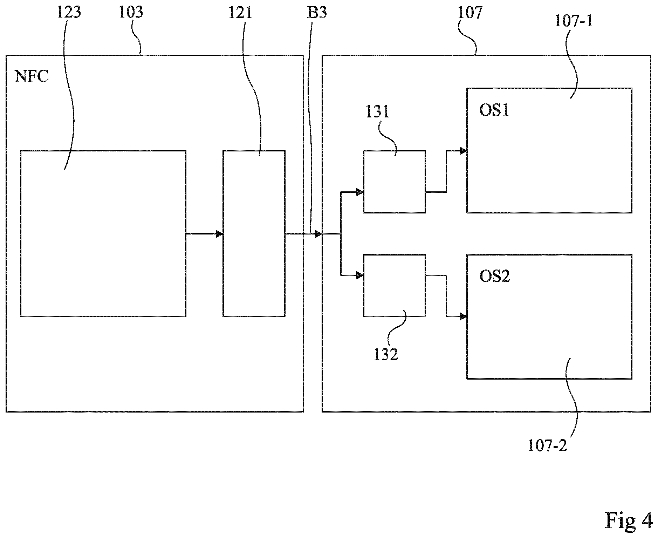

La figure 4 représente, de façon schématique et sous forme de blocs, un autre mode de réalisation d'un moyen de liaison entre le module NFC 103 et l'élément sécurisé 107 du mode de réalisation de l'appareil 100 décrit en relation avec la figure 1. Comme en figures 2 et 3, l'élément 107 est adapté à mettre en oeuvre deux systèmes d'exploitation, chacun symbolisé par un bloc portant la référence (OS1) 107-1, (OS2) 107-2.

Dans ce mode de réalisation, le module NFC 103 est relié à l'élément sécurisé 107 par l'intermédiaire d'un unique bus B3 qui transmet indifféremment des données et commandes destinées aux deux systèmes d'exploitation. Les données et commandes sont aiguillées par un circuit d'aiguillage 121 compris dans le module NFC 103 vers le système d'exploitation concerné. Dans le mode de réalisation illustré par la figure 4, le circuit d'aiguillage 121 comprend une entrée, recevant des données d'un circuit de réception 123, et une sortie, reliée au bus B3. Selon une variante de réalisation, l'appareil 100 peut comprendre un élément sécurisé adapté à mettre en oeuvre plus de deux systèmes d'exploitation, dans ce cas, le circuit d'aiguillage 121 comprend autant de sorties que de systèmes d'exploitation pouvant recevoir et/ou transmettre des données du module NFC, et mis en oeuvre par l'élément sécurisé. Selon un mode de réalisation, le circuit d'aiguillage 121 est une table de routage. Le module NFC 103 comprend généralement une table de routage, mais la table de routage 121 est une table de routage additionnelle. Si le système supporte un nombre indéterminé de systèmes d'exploitation, le module NFC en est informé (par exemple lors de l'établissement de la communication avec le module 107 ou le processeur 101) afin de cibler un système d'exploitation précis 107-1 ou 107-2 et non l'élément sécurisé 107 de manière générale.

Le circuit d'aiguillage 121 utilise, par exemple, une information contenue dans les données ou les commandes pour déterminer quel système d'exploitation en est le destinataire. Le circuit d'aiguillage 121 est par exemple mis en oeuvre par une table de correspondance, par exemple stockée dans une mémoire non volatile, interprété par les circuits de conversion 131 et 132.

Les circuits de conversion 131 et 132 sont des circuits de conversion de données adaptés à convertir les données et commandes reçues afin qu'elles deviennent compréhensibles et exécutables par le système d'exploitation concerné, et que ces circuits de conversion enlèvent des données ou commande de routage qui auraient été ajoutés par le contrôleur NFC. De même, si un message doit être envoyé d'un système d'exploitation précis (107-1 ou 107-2), les circuits de conversion 131 et 132 doivent rajouter les informations nécessaires au routage. A titre d'exemple, les circuits de conversion 131 et 132 sont compris partiellement, ou en totalité, dans l'élément sécurisé 107. Les circuits de conversion 131, 132 permettent, de ce fait, de laisser croire à chaque système d'exploitation 107-1, 107-2 qu'il est seul à pouvoir mettre en oeuvre l'élément sécurisé 107. En effet, chaque système d'exploitation ne reçoit des données et des commandes qui lui sont directement destinées et qu'il est apte à interpréter et/ou à mettre en oeuvre.

Selon une variante de réalisation, le bus B3 pouvant être composé de plusieurs conducteurs, un premier groupe de conducteurs pourrait être délégué à la transmission de données et de commandes ne concernant qu'un système d'exploitation 107-1, et un deuxième groupe de données pourrait être délégué à la transmission de données et de commandes vers l'autre système d'exploitation.

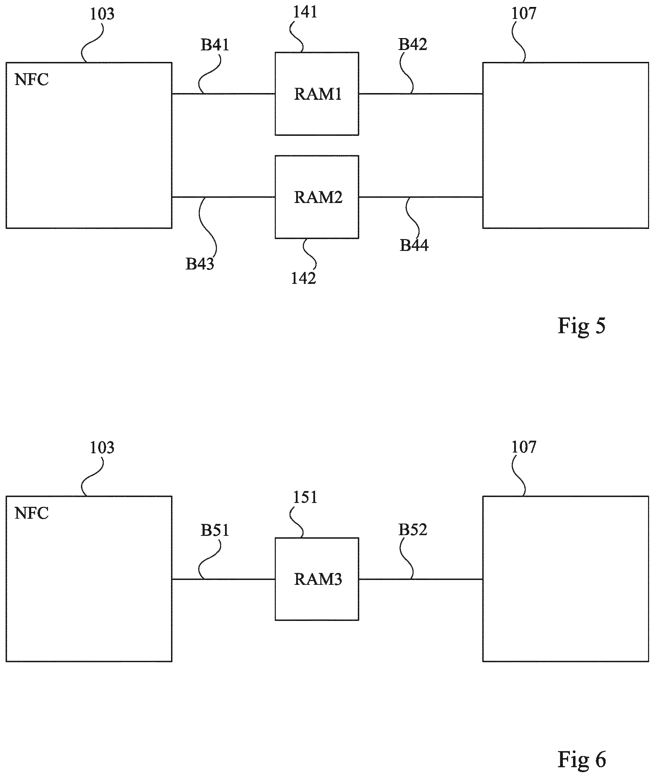

La figure 5 représente, de façon très schématique et sous forme de blocs, un autre mode de réalisation de moyens de liaison entre le module NFC 103 et l'élément sécurisé 107 du mode de réalisation de l'appareil 100 décrit en relation avec la figure 1. L'élément 107 est adapté à mettre en oeuvre deux systèmes d'exploitation notés OS1 et OS2, et est identique à l'élément 107 décrit en relation avec la figure 2. Ainsi, l'élément 107 comprend la couche d'abstraction 108.

Le mode de réalisation décrit ici est une variante de réalisation du mode de réalisation décrit en relation avec la figure 2, dans lequel les bus B1 et B2 sont chacun remplacé par une mémoire. Plus particulièrement, chaque bus B1, B2 est remplacé par une mémoire volatile 141 (RAM1), 142 (RAM2). Chaque mémoire 141, respectivement 142, est reliée au module NFC 103 par un bus B41, respectivement B43, et est reliée à l'élément 107 par un bus B42, respectivement B44.

Dans ce mode de réalisation, le module NFC (NFC) 103 est adapté à aiguiller les données vers la mémoire 141, 142 adéquate.

Dans ce mode de réalisation, les données envoyées par le module NFC 103 à l'élément 107, et destinées au système d'exploitation OS1 sont, dans un premier temps, transmises, par le bus B41, puis écrites dans la mémoire 141 par le module NFC 103. Dans un deuxième temps, l'élément 107 récupère lesdites données dans la mémoire 141, par l'intermédiaire du bus B42. Les données arrivent ensuite au niveau de la couche d'abstraction 108 comme décrit en relation avec la figure 2.

De même, les données envoyées par le module NFC 103 à l'élément 107, et destinées au système d'exploitation OS2 sont, dans un premier temps, transmises, par le bus B43, puis écrites dans la mémoire 142 par le module NFC 103. Dans un deuxième temps, l'élément 107 récupère lesdites données dans la mémoire 142, par l'intermédiaire du bus B44. Les données arrivent ensuite au niveau de la couche d'abstraction 108 comme décrit en relation avec la figure 2.

Selon une variante de réalisation, les mémoires volatiles 141 et 142 sont deux zones mémoires d'une même mémoire volatile.

La figure 6 représente, de façon très schématique et sous forme de blocs, un autre mode de réalisation de moyens de liaison entre le module NFC 103 et l'élément sécurisé 107 du mode de réalisation de l'appareil 100 décrit en relation avec la figure 1.

Le mode de réalisation décrit ici est une variante de réalisation des modes de réalisation décrits en relation avec les figures 3 et 4, dans lesquels le bus B3 est remplacé par une mémoire volatile. Plus particulièrement, le bus B3 est remplacé par une mémoire volatile 151 (RAM3), reliée au module NFC 103 par un bus B51 et à l'élément 107 par un bus B52.

Dans ces variantes, les données envoyées par le module NFC 103 à l'élément 107, sont, dans un premier temps, transmises, par le bus B51, puis écrites dans la mémoire 151 par le module NFC 103. Dans un deuxième temps, l'élément 107 récupère lesdites données dans la mémoire 151, par l'intermédiaire du bus B52.

Le module NFC et l'élément 107 peuvent être identiques au module NFC et à l'élément 107 décrits en relation avec la figure 3 ou être identiques au module NFC et à l'élément 107 décrits en relation avec la figure 4.

Divers modes de réalisation et variantes ont été décrits. L'homme de l'art comprendra que certaines caractéristiques de ces divers modes de réalisation et variantes pourraient être combinées, et d'autres variantes apparaitront à l'homme de l'art.

Enfin, la mise en oeuvre pratique des modes de réalisation et variantes décrits est à la portée de l'homme du métier à partir des indications fonctionnelles données ci-dessus.

## Revendications

1. Appareil électronique (100) comprenant au moins un élément sécurisé (107) adapté à mettre en oeuvre au moins deux systèmes d'exploitation, et au moins un module de communication en champ proche (103), **caractérisé en ce que** ledit au moins un module de communication en champ proche (103) est
relié audit un élément sécurisé (107) par au moins deux mémoires volatiles (141, 142) ou deux zones mémoires d'une même mémoire volatile, dans lequel le module de communication en champ proche (103) est adapté à aiguiller des données vers l'une ou l'autre des mémoires volatiles (141, 142), l'élément sécurisé comportant une interface (108) adaptée à associer chaque système d'exploitation à une des mémoires volatiles (141, 142).

2. Appareil selon la revendication 1, dans lequel chaque mémoire volatile est reliée au module de communication en champ proche (103) par un premier bus (B41, B43 ; B51), et à l'élément sécurisé (107) par un deuxième bus (B42, B44 ; B52).

3. Appareil selon la revendication 2, dans lequel chaque mémoire volatile est directement connectée au module de communication en champ proche (103) par le premier bus (B41, B43 ; B51), et à l'élément sécurisé (107) par le deuxième bus (B42, B44 ; B52).

4. Appareil selon l'une quelconque des revendications 1 à 3, dans lequel l'interface (108) utilise une table de routage pour faire le lien entre un système d'exploitation (107-1, 107-2) et un bus (B1, B2).

5. Appareil selon l'une quelconque des revendications 1 à 4, dans lequel le nombre de mémoires volatiles est égal au nombre de systèmes d'exploitation.

6. Appareil selon l'une quelconque des revendications 1 à 5, dans lequel le module de communication en champ proche (103) est relié audit élément sécurisé par, en outre, un circuit d'aiguillage (120 ; 121) aiguillant des données entre les systèmes d'exploitation.

7. Appareil selon la revendication 6, dans lequel le circuit d'aiguillage (120) est une machine d'état.

8. Appareil selon la revendication 7, dans lequel la machine d'état fait partie de l'élément sécurisé (107).

9. Appareil selon la revendication 6, dans lequel le circuit d'aiguillage (121) est une table de routage.

10. Appareil selon la revendication 9, dans lequel la table de routage fait partie du module de communication en champ proche (103).

11. Appareil selon l'une quelconque des revendications 1 à 10, dans lequel le circuit d'aiguillage (120) est adapté à stocker des paramètres caractérisant un des systèmes d'exploitation.

12. Appareil selon l'une quelconque des revendications 1 à 11, dans lequel un des systèmes d'exploitation (107-1, 107-2) est le système d'exploitation d'une carte SIM, d'une carte de paiement, ou d'une carte de transport en commun.

## Patentansprüche

1. Elektronische Vorrichtung (100) mit mindestens einem sicheren Element (107), das in der Lage ist, mindestens zwei Betriebssysteme zu implementieren, und mit mindestens einer Nahfeld-Kommunikationseinheit (103), **dadurch gekennzeichnet, dass** die mindestens eine Nahfeld-Kommunikationseinheit (103) mit dem einen sicheren Element (107) durch mindestens zwei flüchtige Speicher (141, 142) oder zwei Speicherbereiche eines gleichen flüchtigen Speichers gekoppelt ist,
wobei die Nahfeld-Kommunikationseinheit (103) in der Lage ist, Daten zu dem einen oder dem anderen der flüchtigen Speicher (141, 142) zu leiten, wobei das sichere Element eine Schnittstelle (108) aufweist, die in der Lage ist, jedes Betriebssystem mit einem der flüchtigen Speicher (141, 142) zu verknüpfen.

2. Vorrichtung nach Anspruch 1, wobei jeder flüchtige Speicher mit der Nahfeld-Kommunikationseinheit (103) über einen ersten Bus (B41, B43; B51) verbunden ist und mit dem sicheren Element (107) über einen zweiten Bus (B42, B44; B52) verbunden ist.

3. Vorrichtung nach Anspruch 2, wobei jeder flüchtige Speicher über den ersten Bus (B41, B43; B51) direkt mit der Nahfeld-Kommunikationseinheit (103) verbunden ist und über den zweiten Bus (B42, B44; B52) direkt mit dem sicheren Element (107) verbunden ist.

4. Vorrichtung nach einem der Ansprüche 1 bis 3, wobei die Schnittstelle (108) eine Routing-Tabelle als Verbindung zwischen einem Betriebssystem (107-1, 107 2) und einem Bus (B1, B2) verwendet.

5. Vorrichtung nach einem der Ansprüche 1 bis 4, wobei die Anzahl der flüchtigen Speicher gleich der Anzahl der Betriebssysteme ist.

6. Vorrichtung nach einem der Ansprüche 1 bis 5, wobei die Nahfeld-Kommunikationseinheit (103) mit dem sicheren Element gekoppelt ist, und zwar unter anderem über eine Routing-Schaltung (120; 121), die Daten zwischen den Betriebssystemen leitet.

7. Vorrichtung nach Anspruch 6, wobei die Routing-Schaltung (120) eine Zustandsmaschine ist.

8. Vorrichtung nach Anspruch 7, wobei die Zustandsmaschine einen Teil des sicheren Elements (107) bildet.

9. Vorrichtung nach Anspruch 6, wobei die Routing-Schaltung (121) eine Routing-Tabelle ist.

10. Vorrichtung nach Anspruch 9, wobei die Routing-Tabelle einen Teil der Nahfeld-Kommunikationseinheit (103) bildet.

11. Vorrichtung nach einem der Ansprüche 1 bis 10, wobei die Routing-Schaltung (120) in der Lage ist, Parameter zu speichern, die eines der Betriebssysteme charakterisieren.

12. Vorrichtung nach einem der Ansprüche 1 bis 11, wobei eines der Betriebssysteme (107-1, 107-2) das Betriebssystem einer SIM-Karte, einer Zahlungskarte oder einer ÖPNV-Karte ist.

## Claims

1. An electronic device (100) comprising at least one secure element (107) capable of implementing at least two operating systems, and at least one near field communication unit (103), **characterized in that** the said at least one near filed communication unit (103) is coupled to said one secure element (107) by at least two volatile memories (141, 142) or two memory areas of a same volatile memory,
wherein the near field communication unit (103) is capable of routing data towards one or the other of the volatile memories (141, 142), the secure element comprising an interface (108) capable of associating each operating system with one of the volatile memories (141, 142).

2. The device of claim 1, wherein each volatile memory is coupled to the near field communication module (103) by a first bus (B41, B43; B51), and to the secure element (107) by a second bus (B42, B44; B52).

3. The device of claim 2, wherein each volatile memory is directly connected to the near field communication module (103) by the first bus (B41, B43; B51), and to the secure element (107) by the second bus (B42, B44; B52) .

4. The device of any of claims 1 to 3, wherein the interface (108) uses a routing table as a link between an operating system (107-1, 107-2) and a bus (B1, B2).

5. The device of any of claims 1 to 4, wherein the number of volatile memories is equal to the number of operating systems.

6. The device of any of claims 1 to 5, wherein the near field communication module (103) is coupled to said secure element by, further, a routing circuit (120; 121) routing data between the operating systems.

7. The device of claim 6, wherein the routing circuit (120) is a state machine.

8. The device of claim 7, wherein the state machine forms part of the secure element (107).

9. The device of claim 6, wherein the routing circuit (121) is a routing table.

10. The device of claim 9, wherein the routing table forms part of the near field communication module (103).

11. The device of any of claims 1 to 10, wherein the routing circuit (120) is capable of storing parameters characterizing one of the operating systems.

12. The device of any of claims 1 to 11, wherein one of the operating systems (107-1, 107-2) is the operating system of a SIM card, of a payment card, or of a public transport card.
